# EUROPÄISCHE PATENTANMELDUNG

(11) **EP 4 344 947 A1**
(43) Veröffentlichungstag der Anmeldung: **03.04.2024**
(21) Anmeldenummer: 23193292.2
(22) Anmeldetag: 24.08.2023
(51) Int. Cl.: B60N 2/68

(54) **RÜCKENLEHNENELEMENT FÜR EINEN FAHRZEUGSITZ**

(30) Priorität: 30.09.2022 DE 102022125400
(71) Anmelder: GRAMMER AG, 92289 Ursensollen (DE)
(72) Erfinder: Pöhlmann, Andreas, 92242 Hirschau (DE)
(74) Vertreter: Hannke Bittner & Partner mbB Regensburg

(57) **Zusammenfassung**

Die Erfindung betrifft ein Rückenlehnenelement für einen Fahrzeugsitz, wobei das Rückenlehnenelement zumindest ein Rahmenelement umfasst, welches aus einem Rohrelement ausgebildet ist und zumindest einen Abschnitt des Rückenlehnenelements ausgestaltet, wobei eine Kontur des zumindest einen Rahmenelements durch eine Mehrzahl von Biegungen des Rohrelements gegeben ist und derart ausgestaltet ist, dass zumindest eine innenliegende Fläche von dem Rohrelement umschlossen ist.

## Beschreibung

Die Erfindung betrifft ein Rückenlehnenelement für einen Fahrzeugsitz, umfassend ein Rahmenelement und einen Fahrzeugsitz umfassend ein derartiges Rückenlehnenelement.

Derartige Fahrzeugsitze sind für Nutzfahrzeuge beispielsweise LKW, Traktoren oder Baumaschinen oder ähnliche Fahrzeuge geeignet. Üblicherweise werden derartige Rückenlehnenelemente aus verschiedenen Einzelteilen zusammengeschweißt. So werden beispielsweise mehrere Holme mit Verbindungs- und/oder Versteifungsplatten oder -blechen verschweißt. Nachteilig ist hierbei die Anzahl der Teile und die Anzahl beziehungsweise die Gesamtlänge der Schweißnähte. Wünschenswert wäre auch eine Reduktion des Gewichts des Rückenlehnenelements. Ferner ist auch nachteilig, dass aufgrund der vorgefertigten Einzelteile eine geringe Flexibilität hinsichtlich einer Umgestaltung der Rückenlehne vorhanden ist.

Aufgabe der Erfindung ist es ein Rückenlehnenelement bereitzustellen, bei welchem die genannten Nachteile überwunden oder zumindest reduziert sind.

Die Aufgabe wird durch den Gegenstand des unabhängigen Anspruchs 1 gelöst. Vorteilhafte Ausgestaltungen sind den Unteransprüchen zu entnehmen.

Kerngedanke der Erfindung ist ein Rückenlehnenelement für einen Fahrzeugsitz, wobei das Rückenlehnenelement zumindest ein Rahmenelement umfasst, welches aus einem Rohrelement ausgebildet ist und zumindest einen Abschnitt des Rückenlehnenelements ausgestaltet, wobei eine Kontur des zumindest einen Rahmenelements durch eine Mehrzahl von Biegungen des Rohrelements gegeben ist und derart ausgestaltet ist, dass zumindest eine innenliegende Fläche von dem Rohrelement umschlossen ist.

Durch Verwendung des zumindest einen Rahmenelements, welches einen Abschnitt des Rückenlehnenelements anhand einer Vielzahl von Biegungen eines Rohrelements ausbildet, können eine Vielzahl von Schweißverbindungen vermieden werden. Ferner wird auch die Anzahl der zu verschweißenden Bauteile erheblich reduziert. Folglich erfolgt auch eine Reduktion des Gewichts des Rückenlehnelements. Darüber hinaus ist zur Herstellung des Rückenlehnenelements ein stark reduzierter Werkzeugeinsatz notwendig. Durch die Verwendung moderner CNC-Biegemaschinen kann die Kontur des Rahmenelements bei Bedarf einfach umgestaltet werden, wodurch eine hohe Design-Flexibilität gemäß den Anforderungen des Rückenlehnenelements ermöglicht wird.

Biegung bezeichnet in der technischen Mechanik eine mechanische Veränderung der Geometrie von schlanken Bauteilen beispielsweise dem Rohrelement. Typisch für Biegung sind Krümmungsänderungen der Mittellinie oder -fläche gegenüber der Krümmung, die das Bauteil im unbeanspruchten Zustand hatte, durch statische und dynamische Beanspruchungen.

Das Rückenlehnenelement erstreckt sich entlang einer Längsachse (X), entlang einer Breitenachse (Y) und entlang einer Höhenachse (Z).

Nach einer besonders vorteilhaften Ausführungsform umfasst das Rückenlehnenelement einen unteren Bereich, der dazu geeignet und dafür vorgesehen ist, eine Abstützung in dem Lendenwirbelbereich des Insassen bereitzustellen. Vorteilhafterweise umfasst das Rückenlehnenelement einen oberen Bereich, der dazu geeignet und dafür vorgesehen ist, eine Abstützung in dem Schulterbereich des Insassen bereitzustellen und/oder eine Kopfstütze aufzunehmen oder bereitzustellen.

Vorteilhafterweise ist das Rahmenelement aus einem einteilig ausgebildeten Rohrelement ausgebildet. Unter einer einteiligen Ausgestaltung ist hierbei zu verstehen, dass sämtliche Abschnitte aus einem einzigen und einheitlichen Teil gefertigt werden.

Nach einer weiteren besonders vorteilhaften Ausführungsform umfasst das Rahmenelement einen Gurtabschnitt, welcher dafür vorgesehen und geeignet ist eine Gurtvorrichtung daran anzuordnen. Vorzugsweise ist der Gurtabschnitt in dem oberen Bereich des Rückenlehnenelements vorgesehen. Vorteilhafterweise sind in einem entlang einer Längsachse (X) unteren Ende des Gurtabschnitts zwei Abschnitte des Rohrelements im Wesentlichen entlang einer Höhenachse (Z) nebeneinander anliegend. Diese übereinanderliegenden Abschnitte des Rohrelements können auch als Verwicklung des Rohrelements bezeichnet werden. Durch die übereinanderliegenden Abschnitte des Rohrelements wird eine lokale Verstärkung des Rahmens beziehungsweise des Rückenlehnenelements erreicht. Durch die Anordnung der Gurtvorrichtung an dem Gurtabschnitt erfolgt bei einem Unfall oder Crash eine erhöhte Krafteinwirkung auf den Gurtabschnitt. Insbesondere in dem Bereich, in welchem die Abschnitte des Rohrelements übereinanderliegen, sind die auftretenden Kräfte besonders groß. In der Regel ist ein großer Anteil der Krafteinwirkung entlang der Höhenrichtung (Z) nach vorne gerichtet. Durch das beschriebene vorteilhafte Nebeneinanderliegen des ersten Abschnitts des Rohrelements und des zweiten Abschnitts des Rohrelements entlang der Höhenachse (Z) wird gerade einer solchen Krafteinwirkung Rechnung getragen.

Nach einer weiteren bevorzugten Ausführungsform ist der Gurtabschnitt derart ausgebildet, dass dieser eine erste innenliegende Fläche begrenzt. Vorteilhafterweise ist in dieser ersten innenliegenden Fläche, zumindest abschnittsweise, ein erstes plattenartiges Element angeordnet. Das erste plattenartige Element kann demnach die gesamte erste innenliegende Fläche ausfüllen oder auch nur einen Teil der ersten innenliegenden Fläche. Vorzugsweise ist das erste plattenartige Element mittels einer stoffschlüssigen Verbindung an dem Gurtabschnitt befestigt. Die stoffschlüssige Verbindung besteht somit zwischen den Abschnitten des Rohrelements, welche den Gurtabschnitt bilden beziehungsweise die erste innenliegende Fläche begrenzen oder umschließen und dem ersten plattenartigen Element. Eine solche stoffschlüssige Verbindung ist vorzugsweise eine Schweißverbindung. Alternativ oder kumulativ können weitere Verbindungen zwischen dem ersten plattenartigen Element und dem Gurtabschnitt vorgesehen sein, beispielsweise kraft- und/oder formschlüssige Verbindungen in der Form von Schraubverbindungen, Nietenverbindungen, Schnappverbindungen etc. Das erste plattenartige Element besteht vorteilhafterweise aus Metall und ist beispielsweise ein Blech. Ferner ist es von Vorteil, dass das erste plattenartige Element Mittel zur Befestigung einer Gurtvorrichtung aufweist, beispielsweise Bohrungen, Vorsprunge, Aufnahmen, etc. oder eine Kombination der genannten Mittel.

Nach einer weiteren bevorzugten Ausführungsform umfasst der obere Bereich des Rückenlehnenelements das Rahmenelement. Bevorzugt ist lediglich ein Rahmenelement in dem oberen Bereich des Rückenlehnenelements vorgesehen. Vorteilhafterweise ist das Rahmenelement an einem unteren Rückenlehnenelementteil angeordnet, welches den unteren Bereich des Rückenlehnenelements ausbildet. Das Rückenlehnenelementteil kann beispielsweise als ein Standartelement ausgebildet sein und eine entsprechende Aufnahme für das Rahmenelement umfassen. Demnach würde das Rückenlehnenelement lediglich ein Rahmenelement umfassen, welches zumindest einen äußeren Rahmen für den oberen Bereich des Rückenlehnenelements darstellt. Vorteilhafterweise ist in dem oberen Bereich weiterhin ein Gurtabschnitt des Rahmenelements vorgesehen.

Vorteilhafterweise sind somit der Gurtabschnitt sowie der Abschnitt, der zur Aufnahme oder Ausbildung einer Kopfstütze und/oder zur Abstützung des Schulterbereichs geeignet ist durch ein einziges einteiliges Rohrelement ausgebildet. Denkbar wäre jedoch eine Ausführungsform ohne den Gurtabschnitt, welche bei Fahrzeugsitzen ohne Gurtintegration verwendet werden kann. Das den oberen Bereich des Rückenlehnenelements umfassende Rahmenelement ist lediglich durch Biegungen eines Rohrelements geformt. Das Rahmenelement kann durch das Biegeverfahren flexibel ausgestaltet werden und somit hinsichtlich verschiedener Ausgestaltungen des unteren Rückenlehnenelementteils angepasst werden.

Denkbar wäre auch, dass das untere Rückenlehnenelementteil ein zweites Rahmenelement umfasst, welches aus einem zweiten Rohrelement geformt ist und dessen Kontur zumindest durch eine Mehrzahl von Biegungen dieses Rohrelements gegeben ist.

Nach einer weiteren vorteilhaften Ausführungsform umfassen der untere Bereich des Rückenlehnenelements und der obere Bereich des Rückenlehnenelements das zumindest eine Rahmenelement. Vorteilhafterweise ist lediglich ein Rahmenelement vorgesehen. Vorzugsweise bildet somit ein einziges Rahmenelement geformt aus lediglich einem Rohrelement zumindest einen äußeren Rahmen für das Rückenlehnenelement. Vorzugsweise umfasst dieses einzige Rahmenelement einen Gurtabschnitt. Denkbar wäre jedoch auch eine Ausführungsform ohne einen Gurtabschnitt welche bei Fahrzeugsitzen ohne Gurtintegration verwendet werden kann.

Vorzugsweise kann des Rahmenelement ein äußeres Gerüst des Rückenlehnenelements darstellen, an welche weiteren Elemente, beispielsweise Stützplatten oder -bleche oder Streben angeordnet werden. Im Gegensatz zu den herkömmlichen Rückenlehnenelementen ist ein Rückenlehnenelement mit einem derartigen Rahmenelement effektiver herzustellen und weist darüber hinaus auch noch ein geringeres Gewicht auf.

Nach einer weiteren vorteilhaften Ausführungsform weist ein unterer Abschnitt des Rahmenelements zwei schlaufenartige Segmente auf, welche entlang einer Breitenachse (Y) voneinander beabstandet sind. Bevorzugt umschließen die schlaufenartigen Segmente jeweils eine zweite innenliegende Fläche. Vorteilhafterweise sind in oder auf den beiden zweiten innenliegenden Flächen zumindest abschnittsweise, jeweils ein zweites plattenartiges Element angeordnet. Das jeweilige seitliche zweite plattenartige Element kann demnach die gesamte jeweilige zweite innenliegende Fläche ausfüllen oder auch nur einen Teil der jeweiligen zweiten innenliegenden Fläche. Vorzugsweise ist das jeweilige zweite plattenartige Element mittels einer stoffschlüssigen Verbindung an den jeweiligen schlaufenartigen Segmenten angeordnet. Die stoffschlüssige Verbindung besteht somit zwischen dem jeweiligen zweiten plattenartigen Element und den Abschnitten des Rohrelements, welche das jeweilige schlaufenartige Segment bilden beziehungsweise die jeweilige zweite innenliegende Fläche begrenzen oder umschließen. Eine solche stoffschlüssige Verbindung ist vorzugsweise eine Schweißverbindung. Alternativ oder kumulativ können weitere Verbindungen zwischen dem jeweiligen zweiten plattenartigen Element und dem jeweiligen schlaufenartigen Segment vorgesehen sein, beispielsweise kraft- und/oder formschlüssige Verbindungen in der Form von Schraubverbindungen, Nietenverbindungen, Schnappverbindungen etc. Das jeweilige zweite plattenartige Element besteh vorteilhafterweise aus Metall und ist beispielsweise ein Blech. Ferner ist es vorteilhaft, dass das jeweilige zweite plattenartige Element entsprechende Mittel aufweist um eine Anordnung einer Reclinervorrichtung zu ermöglichen, beispielsweise Bohrungen, Durchbrüche, Vorsprunge, etc. oder eine Kombination der genannten Mittel.

Vorteilhafterweise umfasst das jeweilige schlaufenartige Segment einen entlang der Längsachse (X) nach unten verlaufenden dritten Abschnitt des Rohrelements und einen entlang der Längsachse (X) nach oben verlaufenden vierten Abschnitt des Rohrelements.

Vorzugsweise ist der dritte Abschnitt mit dem vierten Abschnitt über einen gebogenen fünften Abschnitt des Rohrelements verbunden. Dabei ist es von Vorteil, dass in einem unteren Bereich des schlaufenartigen Segments der dritte Abschnitt und der vierte Abschnitt entlang der Höhenachse (Z) beabstandet sind. Somit liegt die zweite innenliegende Fläche zwischen dem dritten Abschnitt und dem vierten Abschnitt. In einem oberen Bereich des schlaufenartigen Segments sind der dritte Abschnitt und der vierte Abschnitt aneinander anliegend. Ferner ist vorteilhafterweise ein Querabschnitt des Rohrelements vorgesehen, welcher sich entlang der Breitenachse (Y) zwischen den oberen Bereichen der beiden schlaufenartigen Segmente erstreckt. Vorteilhafterweise erfolgt die Biegung des fünften Abschnitts und somit auch die Schaffung der schlaufenartigen Segmente durch eine Biegung des Querabschnitts aus einer Ebene parallel zu einer Ebene aufgespannt durch die Längsachse (X) und der Breitenachse (Y) um annähernd 180° nach oben, so dass der Querabschnitt an weiter oben liegenden Abschnitte des Rohrelements anliegt.

Vorteilhafterweise sind alle aneinander anliegenden Abschnitte des Rohrelements des Rahmenelements mittels einer stoffschlüssigen Verbindung verbunden. Eine solche stoffschlüssige Verbindung ist vorzugsweise eine Schweißverbindung. Alternativ oder kumulativ können weitere Verbindungen zwischen den jeweiligen Abschnitten des Rohrelements vorgesehen sein, beispielsweise kraft- und/oder formschlüssige Verbindungen in der Form von Schraubverbindungen, Nietenverbindungen, Schnappverbindungen etc. Durch derartige Verbindungen wird eine erhöhte Stabilität des Rahmelements gewährleistet.

Vorteilhafterweise ist an dem Rahmenelement zumindest ein weiteres plattenartiges Element und/oder eine Stützstrebe angeordnet. Das weitere plattenartige Element kann in dem unteren Bereich des Rahmenelements angeordnet sein und zur Abstützung eines Insassen im Lendenwirbelberiech dienen. Ein solches plattenartiges Element kann aus einem Metall bestehen und beispielsweise ein Blech sein. Selbstverständlich können weitere Stützplatten oder Streben an dem Rahmenelement angeordnet sein. Ferner können als Mittel zur Befestigung weitere Elemente an dem Rahmenelement angeordnet oder vorgesehen sein, beispielsweise Bohrungen, Durchbrüche, Vorsprünge, etc.

Die vorliegende Aufgabe wird weiterhin von einem Fahrzeugsitz mit einem Rückenlehnenelement nach einem der vorhergehenden beschriebenen Ausführungsformen gelöst. Der Fahrzeugsitz kann dabei mit allen bereits obig im Rahmen des Rückenlehnenelements beschriebenen Merkmalen einzeln oder in Kombination miteinander ausgestattet sein und umgekehrt.

Die vorliegende Aufgabe wird weiterhin von einem Verfahren zur Herstellung eines Rückenlehnenelements für einen Fahrzeugsitz gelöst. Das Verfahren umfasst die folgenden Schritte:
- Bereitstellen eines Rohrelements;
- Mehrmaliges Biegen des Rohrelements mittels einer ersten Rohrbiegemaschine, wodurch eine Vorform geschaffen wird;
- Anlegen eines stabartigen Hilfswerkzeugs
- Biegung der Vorform um das stabartige Hilfswerkzeug derart, dass ein unteres Ende der Vorform zu einem mittleren Bereich der Vorform gebracht wird.

Vorzugsweise ist die erste Rohrbiegemaschine eine CNC-Rohrbiegemaschine. Vorteilhafterweise weist das Verfahren weiterhin zumindest einen der folgenden Schritte auf:
- Verbinden anliegender Abschnitte des Rohrelements, vorzugsweise mittels einer Schweißverbindung;
- Anordnen von zumindest einem plattenartigen Element und/oder einer Stützstrebe vorzugsweise mittels einer Schweißverbindung.

Dabei weist das beschriebene Verfahren die gleichen Vorteile und Ausgestaltungen, einzeln oder in Kombination wie in Zusammenhang mit dem obig beschriebenen Rückenlehnenelement und/oder Fahrzeugsitz auf.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: ein Rückenlehnenelement aus dem Stand der Technik;
- Fig. 2: ein Rahmenelement nach einer Ausführungsform;
- Fig. 3: ein Rückenlehnenelement nach einer Ausführungsform;
- Fig. 4: ein Rahmenelement nach einer weiteren Ausführungsform;
- Fig. 5: ein Rückenlehnenelement nach einer weiteren Ausführungsform;
- Fig. 6: ein Rückenlehnenelement nach einer weiteren Ausführungsform;
- Fig. 7a: Krafteinwirkung auf einen Fahrzeugsitz bei einem Crash;
- Fig. 7b: Krafteinleitung bei einem Rahmenelement;
- Fig. 7c:

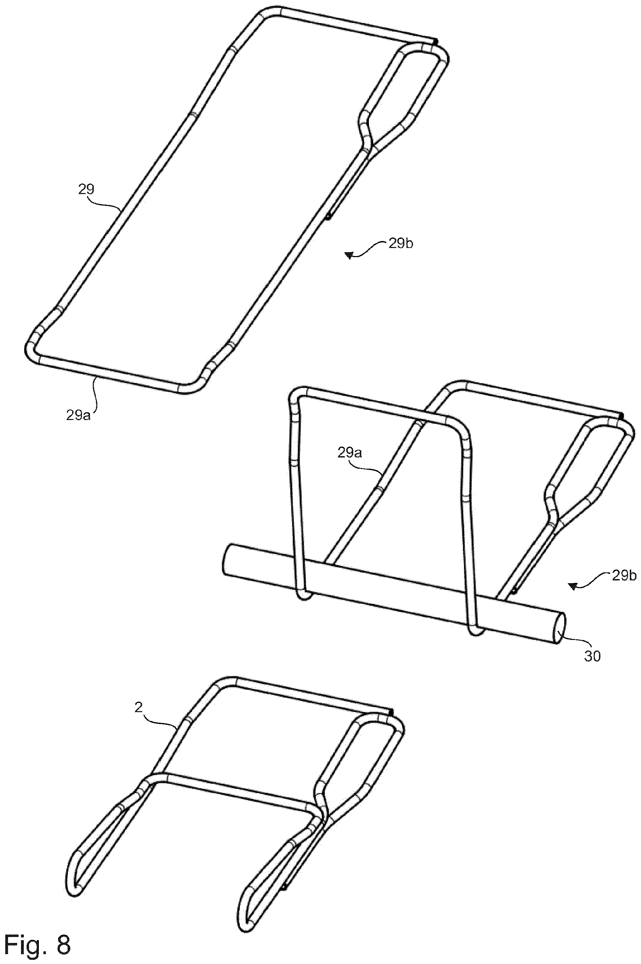

- Fig. 8: Skizze zum Verfahren zur Herstellung eines Rückenlehnenelements;

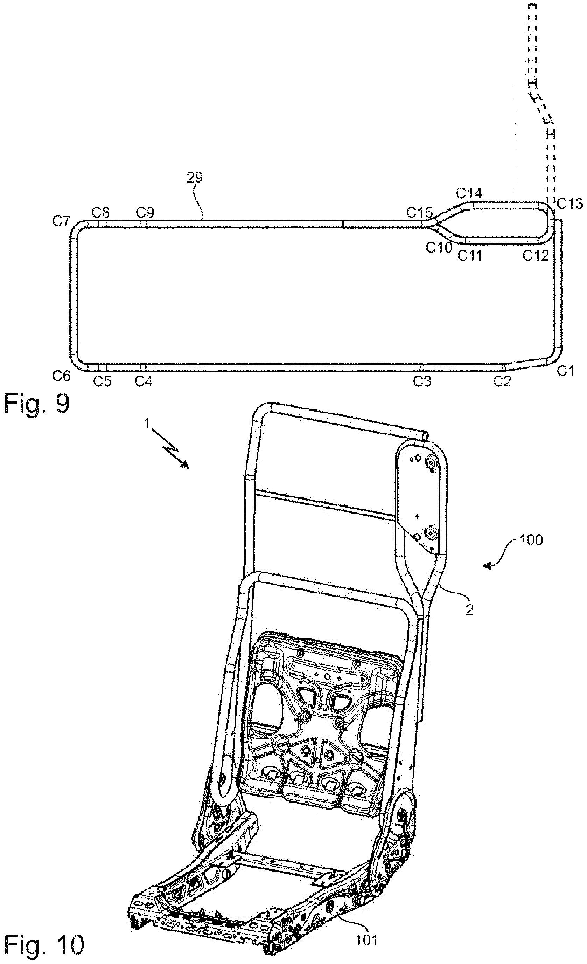

- Fig. 9: Vorform eines Rahmenelements
- Fig. 10: Fahrzeugsitz mit einem Rahmenelement nach einer Ausführungsform.

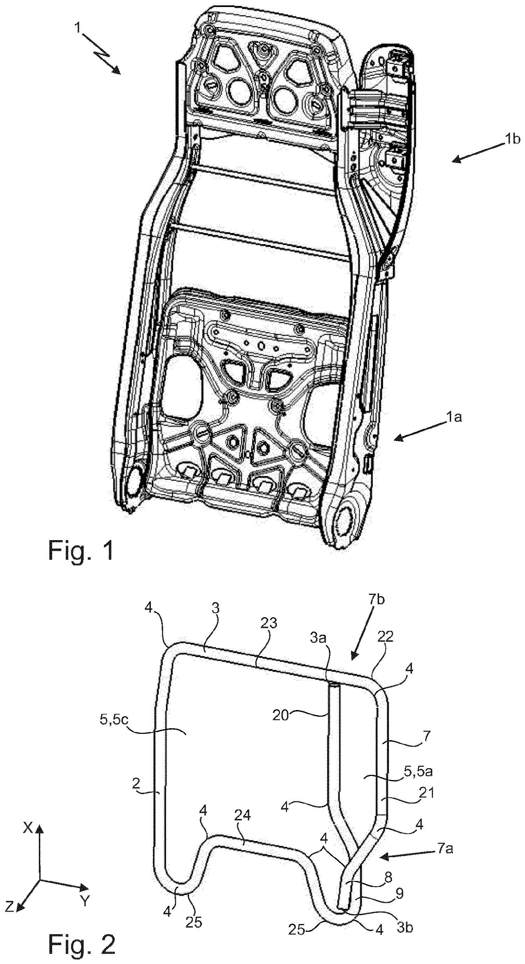

In Figur 1 wird ein Rückenlehnenelement 1 aus dem Stand der Technik dargestellt. Dieses Rückenlehnenelement 1 ist bereinigt hinsichtlich weiterer Elemente, beispielsweise Polster, Beschläge, Recliner, Bezugeinhänge etc. Derartige Elemente werden in der weiteren Beschreibung nicht gezeigt. Selbstverständlich können bei den gezeigten Ausführungsformen derartige Elemente noch vorgesehen werden. Das in Figur 1 gezeigte Rückenlehnenelement 1 besteht aus einer Vielzahl von miteinander verschweißten Einzelteilen in Form von Holmen und diversen Blechen.

In den Figuren 2 bis 6, 7b und 8 bis 10 wird ein Rückenlehnenelement 1 für einen Fahrzeugsitz 100 gezeigt, wobei das Rückenlehnenelement 1 zumindest ein Rahmenelement 2 umfasst, welches aus einem Rohrelement 3 ausgebildet ist und zumindest einen Abschnitt des Rückenlehnenelements 1 ausgestaltet, wobei eine Kontur des zumindest einen Rahmenelements 2 durch eine Mehrzahl von Biegungen 4 des Rohrelements 3 gegeben ist und derart ausgestaltet ist, dass zumindest eine innenliegende Fläche 5 von dem Rohrelement 3 umschlossen ist.

Das Rückenlehnenelement 1 und das Rahmenelement 2 erstrecken sich entlang einer Längsachse X, entlang einer Breitenachse Y und entlang einer Höhenachse Z. Wie aus den Figuren ersichtlich umfassen die Rahmenelemente 2 eine Mehrzahl an Biegungen 4. Diese Biegungen 4 sind nur exemplarisch mit dem entsprechenden Bezugszeichen gekennzeichnet, d.h. nicht alle Biegungen 4 sind mit einem Bezugszeichen gekennzeichnet.

Das Rückenlehnenelement 1 umfasst einen unteren Bereich 1a, der dazu geeignet und dafür vorgesehen ist, eine Abstützung in dem Lendenwirbelbereich des Insassen bereitzustellen, und einen oberen Bereich 1b, der dazu geeignet und dafür vorgesehen, eine Abstützung in dem Schulterbereich des Insassen bereitzustellen und/oder eine Kopfstütze aufzunehmen oder bereitzustellen.

Die in den Figuren gezeigten Ausführungsformen des Rahmenelements 2 umfassen alle einen Gurtabschnitt 7, welcher dafür vorgesehen und geeignet ist eine Gurtvorrichtung daran anzuordnen. Der Gurtabschnitt 7 ist dabei in dem oberen Bereich 1b des Rückenlehnenelements 1 vorgesehen. Das Vorsehen des Gurtabschnitts 7 soll jedoch keine Einschränkung der Allgemeinheit darstellen. Denkbar wären auch Ausführungsformen ohne einen solchen Gurtabschnitt 7. Derartige Rückenlehnenelemente 1 sind für Fahrzeugsitze 100 ohne eine Gurtintegration anzuwenden.

Der Gurtabschnitt 7 weist einen oberen Bereich 7b auf, in welchem dieser im Wesentlichen rechteckartig ausgebildet ist. Demnach wird der Gurtabschnitt 7 in dem oberen Bereich 7b durch einen innenliegenden Abschnitt 20 des Rohrelements 3 und einem außenliegenden Abschnitt 21 des Rohrelements 3 ausgebildet. Diese beiden Abschnitte 20, 21 sind durch einen zweiten Querabschnitt 22 des Rohrelements 3 miteinander verbunden. Der innenliegende Abschnitt 20 des Rohrelements 3 und der außenliegende Abschnitt 21 des Rohrelements 3 sind in dem oberen Bereich 7b entlang der Breitenachse Y voneinander beabstandet. Zum unteren Ende 7a des Gurtabschnitts 7 hin verlaufen der innenliegende Abschnitt 20 der außenliegende Abschnitt 21 entlang der Breitenachse Y V-artig zusammen. Ferner verlaufen der innenliegende Abschnitt 20 und der außenliegende Abschnitt 21 entlang der Höhenachse Z in entgegengesetzter Richtung nach außen bis diese in den ersten Abschnitt 8 des Rohrelements 3 und den zweiten Abschnitt 9 des Rohrelements 3 münden. In dem entlang einer Längsachse X unteren Ende 7a des Gurtabschnitts 7 sind zwei Abschnitte 8, 9 des Rohrelements 3 in Form des ersten Abschnitts 8 und des zweiten Abschnitts 9 im Wesentlichen entlang einer Höhenachse Z nebeneinander anliegend. Der erste 8 und der zweite Abschnitt 9 sind demnach miteinander verwickelt oder verwunden. Vorteilhafterweise sind diese anliegenden ersten 8 und zweiten Abschnitte 9 miteinander verschweißt.

Der Gurtabschnitt 7 ist weiterhin derart ausgebildet, dass dieser eine erste innenliegende Fläche 5, 5a begrenzt. In dieser ersten innenliegenden Fläche 5, 5a ist zumindest abschnittsweise ein erstes plattenartiges Element 10 angeordnet. Das erste plattenartige Element 10 ist dabei mittels einer stoffschlüssigen Verbindung in Form einer Schweißverbindung an dem Gurtabschnitt 7 beziehungsweise dem innenliegenden Abschnitt 20 und dem außenliegende Abschnitt 21 des Rohrelements 3 befestigt. An diesem ersten plattenartigen Element 10 kann dann die Gurtvorrichtung befestigt werden. Hierzu weist das erste plattenartige Element 10 entsprechende Mittel in Form von Bohrungen, Vorsprüngen, Durchbrüchen etc. auf.

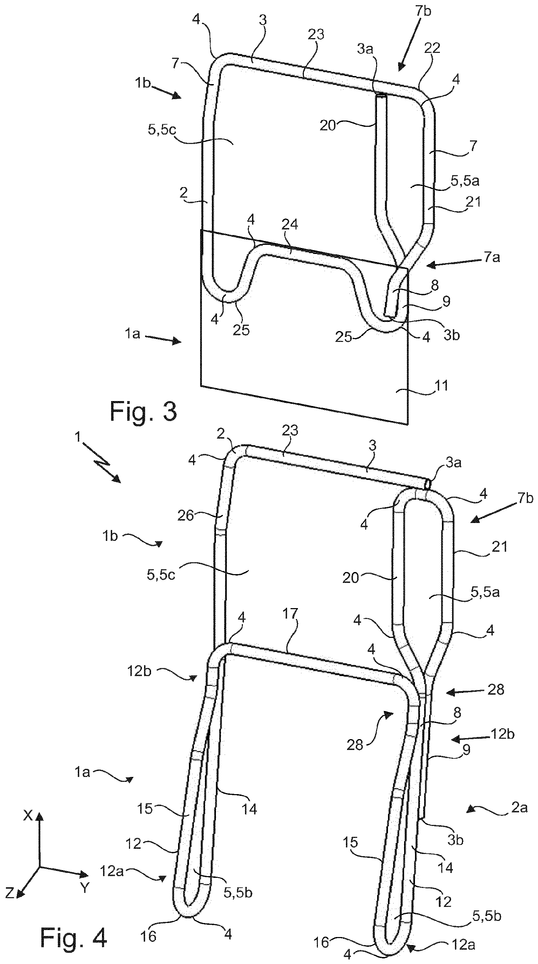

Nach einer ersten Ausführungsform gezeigt in den Figuren 2 und 3 ist ein Rahmenelement 2 vorgesehen, welches einen Rahmen für den oberen Bereich 1b des Rückenlehnenelements 1 darstellt. Das Rahmenelement 2 ist demnach dafür geeignet und dafür vorgesehen, eine Kopfstütze aufzunehmen. Das Rahmenelement 2 kann an einem unteren Rückenlehnenelementteil 11 angeordnet sein, welches den unteren Bereich 1a des Rückenlehnenelements 1 ausbildet. Dies ist in Figur 3 zu erkennen. Ein solches unteres Rückenlehnenelementteil 11 kann aus Standartelementen bestehen, welche vorteilhafterweise miteinander verschweißt sind. Alternativ kann das Rückenlehnenelementteil 11 ein weiteres Rahmenelement 2 umfassen, welches aus einem Rohrelement 3 ausgebildet ist.

Ferner umfasst das Rahmenelement 2 einen Gurtabschnitt 7 wie oben beschrieben. Bei dieser Ausführungsform mündet der innenliegende Abschnitt 20 des Rohrelements 3 in dem ersten Ende 3a des Rohrelements. Dieses erste Ende 3a liegt an dem zweiten Querabschnitt 22 des Rohrelements 3 an und ist vorteilhafterweise mit diesem verschweißt. Der zweite Querabschnitt 22 des Rohrelements 3 ist Teil eines dritten Querabschnitts 23 welcher sich gerade über die gesamte Erstreckung entlang der Breitenachse Y des Rahmenelements 2 erstreckt. Wie bereits ausgeführt geht der außenliegende Abschnitt 21 in den zweiten Abschnitt 9 des Rohrelements 3 über. Der zweite Abschnitt 9 mündet dann in dem zweiten Ende 3b des Rohrelements 3.

Entlang der Längsachse X dem dritten Querabschnitt 23 gegenüber ist ein vierter Querabschnitt 24 des Rohrelements 3. Dieser weist einen entlang der Breitenachse Y geraden mittigen Abschnitt auf, welcher seitlich jeweils in einen im wesentlichen U-förmigen Bogen 25 übergeht. Ein erster U-förmigen Bogen 25 geht in den ersten Abschnitt 8 über. Ein zweiter U-förmiger Bogen 25 ist über einen Seitenabschnitt 26 mit dem dritten Querabschnitt 23 verbunden. Mittels der beiden U-förmigen Bögen 25 kann das Rahmenelement 2 an dem unteren Rückenlehnenelementteil 11 angeordnet beziehungsweise befestigt werden.

Der dritte Querabschnitt 23, der vierte Querabschnitt 24, der Seitenabschnitt 26 und der Gurtabschnitt 7 schließen eine dritte innenliegende Fläche 5, 5c ein.

Gemäß der Ausführungsform gezeigt in Figuren 4, 5 ,6, 7b, 8 und 10 umfasst der untere Bereich 1a des Rückenlehnenelements 1 und der obere Bereich 1b des Rückenlehnenelements 1 das zumindest eine Rahmenelement 2. Dabei ist lediglich ein Rahmenelement 2 vorgesehen, welches aus einem einteiligen Rohrelement 3 geformt beziehungsweise gebogen wurde. Auch bei dieser Ausführungsform umfasst das Rahmenelement 2 den oben beschrieben Gurtabschnitt 7. Dieser umfasst ebenso den innenliegenden Abschnitt 20, den außenliegenden Abschnitt 21, den zweiten Querabschnitt 22 den ersten Abschnitt 8 und den zweiten Abschnitt 9 des Rohrelements 3. Diese Abschnitte verlaufen wie bereits oben beschrieben.

Auch bei dieser Ausführungsform liegen der erste 8 und der zweite Abschnitt 9 entlang der Höhenachse Z nebeneinander an. Ferner umfasst das Rahmenelement 2 gemäß dieser Ausführungsform einen dritten Querabschnitt 23, der sich entlang der Breitenachse Y gerade erstreckt. Im Unterschied zur ersten Ausführungsform ist hier jedoch der zweite Querabschnitt 22 kein Teil des dritten Querabschnitts 23. Vielmehr ist der dritte Querabschnitt 23 entlang der Längsachse X über dem zweiten Querabschnitt 22 angeordnet und liegt an diesem an. Vorteilhafterweise sind die beiden Querabschnitte 22, 23 miteinander verschweißt. Der dritte Querabschnitt 23 mündet in dem ersten Ende 3a des Rohrelements 3, welches somit über dem zweiten Querabschnitt 22 angeordnet ist. Der zweite Abschnitt 9 des Rohrelements 3 mündet weiterhin in dem zweiten Ende 3b des Rohrelements 3.

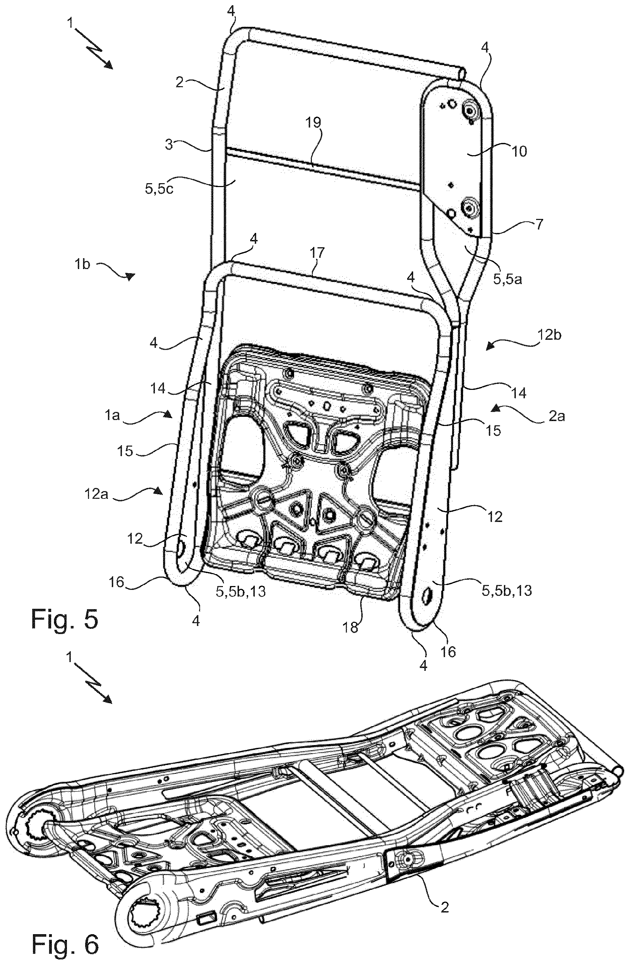

Ein unterer Abschnitt 2a des Rahmenelements 2 weist zwei schlaufenartige Segmente 12 auf, welche entlang einer Breitenachse (Y) voneinander beabstandet sind. Die schlaufenartige Segmente 12 umschließen jeweils eine zweite innenliegende Fläche 5, 5b. In Figur 5 ist ersichtlich, dass in oder auf den zweiten innenliegenden Flächen 5, 5b, zumindest abschnittsweise, jeweils ein zweites plattenartiges Element 13 angeordnet ist. Vorzugsweise ist das jeweilige zweite plattenartige Element 13 mit dem schlaufenartigen Segment 12 verschweißt. Das zweite plattenartige Element 13 weist Mittel auf, um eine Anordnung eines Recliners zu ermöglichen, beispielsweise Bohrungen, Durchbrüche, Vorsprünge etc. oder eine Kombination der genannten Mittel.

Das jeweilige schlaufenartige Segment 12 umfasst durch einen entlang der Längsachse X nach unten verlaufenden dritten Abschnitt 14 des Rohrelements 3 und einen entlang der Längsachse X nach oben verlaufenden vierten Abschnitt 15 des Rohrelements 3. Der jeweilige dritte Abschnitt 14 ist mit dem jeweiligen vierten Abschnitt 15 über einen gebogenen fünften Abschnitt 16 des Rohrelements 3 verbunden.

In einem unteren Bereich 12a des schlaufenartigen Segments 12 sind der dritte Abschnitt 14 und der vierte Abschnitt 15 entlang der Höhenachse Z beabstandet. In einem oberen Bereich 12b des schlaufenartigen Segments 12 sind der dritte Abschnitt 14 und der vierte Abschnitt 15 aneinander anliegend. Vorzugsweise sind der dritte Abschnitt 14 und der vierte Abschnitt 15 in dem oberen Bereich 12b miteinander verschweißt. Durch diese Anordnung ist die zweite innenliegende Fläche 5, 5b umschlossen.

Einer der beiden dritten Abschnitte 14 geht entlang der Längsachse X in den ersten Abschnitt 8 über. Der zweite Abschnitt 9 erstreckt sich entlang der Längsachse X somit weiter entlang des dritten Abschnitts 14, bis dieser in dem zweiten Ende 3b mündet. Der weitere dritte Abschnitt 14 geht entlang der Längsachse X in den Seitenabschnitt 26 über, welcher wiederum in den dritten Querabschnitt 23 übergeht.

Weiterhin ist ein erster Querabschnitt 17 des Rohrelements 3 vorgesehen, welcher sich entlang der Breitenachse Y zwischen den oberen Bereichen 12b der beiden schlaufenartigen Segmente 12 erstreckt. Wie beispielsweise in Figur 4 ersichtlich sind die beiden vierten Abschnitte 15 zu den jeweiligen dritten Abschnitten 14 hingebogen, so dass diese in dem oberen Bereich 12b auf den dritten Abschnitten 14 aufliegen. Der erste Querabschnitt 17 ist somit entlang der Höhenachse Z über den dritten Abschnitten 14 angeordnet. Ferner erste Querabschnitt 17 im Wesentlich parallel zu dem dritten Querabschnitt 23 und weiterhin diesem gegenüberliegend angeordnet.

Der erste Querabschnitt 17, der dritte Querabschnitt 23, der Seitenabschnitt 26 und der Gurtabschnitt 7 schließen somit eine dritte innenliegende Fläche 5, 5c ein.

In Figur 5 ist ersichtlich, dass in dem Gurtabschnitt 7 das erste plattenartige Element 10 angeordnet ist. Ferner ist ersichtlich, dass ein weiteres plattenartiges Element 18 zwischen den beiden schlaufenartigen Segmenten 12 angeordnet ist. Dieses plattenartige Element 18 dient zur Abstützung des Lendenwirbelbereichs eines Insassen. Ebenso ist eine Stützstrebe 19 zwischen dem Seitenabschnitt 26 und dem Gurtabschnitt 7 vorgesehen, welche zur Erhöhung der Stabilität in diesem Bereich dient. Das in Figur 5 dargestellte Rückenlehenelement 1 umfasst somit 7 Bauteile und wiegt 5,32 kg. Schätzungsweise werden ca. 30 Schweißnähte zur Herstellung benötigt. Die Schweißnahtlänge ist schätzungsweise 985 mm. Im Vergleich dazu umfasst das Rückenlehenelement 1 aus Figur 1 15 Bauteile und wiegt 5,36 kg. Es werden 68 Schweißnähte zur Herstellung benötigt. Die Schweißnahtlänge ist schätzungsweise 2467 mm.

In Figur 6 sind eine Rückenlehne aus dem Stand der Technik und das Rahmenelement 2 aus Figur 4 graphisch übereinander gelegt. Es ist beispielsweise ersichtlich, dass die erste Querstrebe 17 in Höhe einer Stützstrebe 19 ist, wodurch diese überflüssig werden würde.

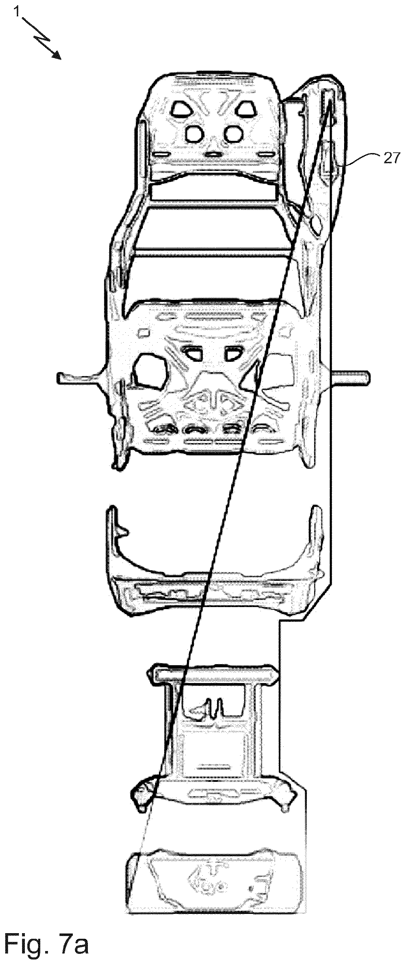

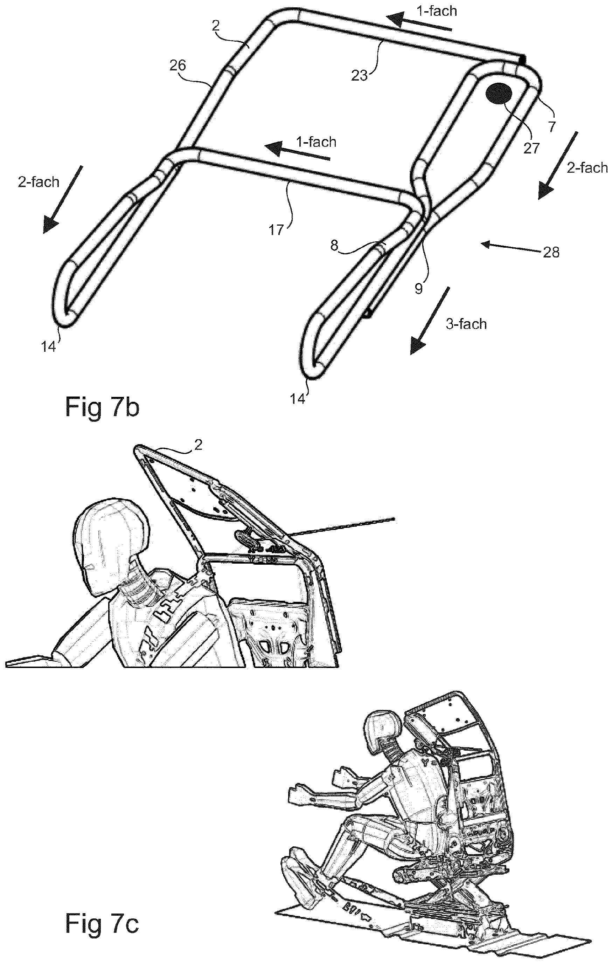

In Figur 7a ist eine Rückenlehne aus dem Stand der Technik und ein entsprechender Krafteintrag 27 bei einem Crash dargestellt. In Figur 7b ist die Einleitung der Kraft durch das Rahmenelement 2 in einem nicht dargestellten Sitzfuß dargestellt. Durch einen Krafteintrag 27 wirkt eine 1-fache Kraft entlang der dritten Querstrebe 23 sowie entlang der ersten Querstrebe 17. Entlang der Längsachse X nach unten wirkt in dem Gurtabschnitt 7 eine 2-fache Kraft. In dem unterhalb des Gurtabschnitts 7 liegenden schlaufenartigen Segment 12 wirkt eine 3-fache Kraft. In dem gegenüberliegenden schlaufenartigen Segment 12 wirkt eine 2-fache Kraft. Hierbei wurde ein Krafteintrag 27 durch nicht dargestellte Armlehnen mitberücksichtigt. In Figur 7c sind Verformungen des Rahmenelements 2 bei einer Simulation eines Crashs dargestellt.

In dem Rahmenelement 2 ist der kritische Punkt 28, in welchem eine maximale Verformung und Krafteinwirkung auftritt, durch drei übereinander liegende Abschnitte in Form des ersten Abschnitts 8, des zweiten Abschnitts 9 und des vierten Abschnitts 15 verstärkt. Das Rahmenelement 2 weist demnach eine äußerst stabile Ausgestaltung auf.

In Figur 10 ist ein Fahrzeugsitz 100 mit einem Rückenlehnenelement 2 und einem Sitzteil 101 dargestellt

Das Rückenlehnenelement 1 kann mittels eines Verfahrens zur Herstellung eines Rückenlehnenelements 1 für einen Fahrzeugsitz 100 bereitgestellt werden. Das Verfahren umfasst die folgenden Schritte:
a) Bereitstellen eines Rohrelements 3;
b) Mehrmaliges Biegen des Rohrelements 3 mittels einer ersten Rohrbiegemaschine vorzugsweise einer CNC-Rohrbiegemaschine, wodurch eine Vorform 29 geschaffen wird;
c) Anlegen eines stabartigen Hilfswerkzeugs 30;
d) Biegung der Vorform 29 um das stabartige Hilfswerkzeug 30 derart, dass ein unteres Ende 29a der Vorform 29 zu einem mittleren Bereich 29b der Vorform 29 gebracht wird.

In Figur 8 ist dieses Verfahren schematisch dargestellt. In Figur 9 ist weiterhin die Vorform 29 detailliert dargestellt. Dabei sind die Biegungen 4 der Vorform 29 dargestellt und mit C1 bis C15 gekennzeichnet. Die Biegungen 4 werden mit aufsteigender Nummer von der ersten Rohrbiegemaschine gebogen.

In Schritt a) werden vorteilhafterweise zunächst die Biegungen 4 C1 bis C9erzeugt. Dann erfolgt eine 180° Rotation mittels eines ersten Roboters. Anschließend werden die verbleibenden Biegungen 4 C15 bis C10, jedoch nicht die Biegung 4 C13, erzeugt. Die Vorform 29 wird nun durch einen zweiten Roboter, der vorzugsweise zwei Greifer umfasst, aus der Rohrbiegemaschine entfernt. Nun wird die Biegung 4 C13 mittels der Rohrbiegmaschine gebogen.

Anschließend wird das stabartige Hilfswerkzeug 30 angelegt. Siehe hierzu Figur 8, mittlere Darstellung. In Schritt d) wird schließlich die Vorform 29 um das stabartige Hilfswerkzeug 30 derart gebogen, dass ein unteres Ende 29a der Vorform 29 zu einem mittleren Bereich 29b der Vorform 29 gebracht wird.

Vorteilhafterweise weist das Verfahren weiterhin zumindest einen der folgenden Schritte auf:
- Verbinden anliegender Abschnitte des Rohrelements 3, vorzugsweise mittels einer Schweißverbindung;
- Anordnen von zumindest einem plattenartigen Element 18 und/oder einer Stützstrebe 19 vorzugsweise mittels einer Schweißverbindung.

Das Rohrelement 3 hat vorteilhafterweise einen Durchmesser in einem Bereich zwischen 10 und 40mm, weiter bevorzugt in einem Bereich zwischen 15mm und 25mm, weiter bevorzugt 20mm. Die Wandstärke liegt vorzugsweise in einem Bereich zwischen 0,5mm bis 3mm, weiter bevorzugt in einem Bereich zwischen 1mm und 2,5mm, weiter bevorzugt bei 1,5mm.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Rückenlehnenelement
- 1a: unterer Bereich des Rückenlehnenelements
- 1b: oberer Bereich des Rückenlehnenelements
- 2: Rahmenelement
- 2a: unterer Abschnitt des Rahmenelements
- 3: Rohrelement
- 3a: erstes Ende des Rohrelements
- 3b: zweites Ende des Rohrelements
- 4: Biegung
- 5: innenliegende Fläche
- 5a: erste innenliegende Fläche
- 5b: zweite innenliegende Fläche
- 5c: dritte innenliegende Fläche
- 7: Gurtabschnitt
- 7a: unteres Ende des Gurtabschnitts
- 7b: oberer Bereich des Gurtabschnitts
- 8: erster Abschnitt des Rohrelements
- 9: zweiter Abschnitt des Rohrelements
- 10: erstes plattenartiges Element
- 11: Rückenlehnenelementteil
- 12: schlaufenartiges Segment
- 12a: unterer Bereich des schlaufenartigen Segments
- 12b: oberer Bereich des schlaufenartigen Segments
- 13: zweites plattenartiges Element
- 14: dritter Abschnitt des Rohrelements
- 15: vierter Abschnitt des Rohrelements
- 16: fünfter Abschnitt des Rohrelements
- 17: erster Querabschnitt des Rohrelements
- 18: plattenartiges Element
- 19: Stützstrebe
- 20: innenliegender Abschnitt des Rohrelements
- 21: außenliegenden Abschnitt des Rohrelements
- 22: zweiter Querabschnitt des Rohrelements
- 23: dritter Querabschnitt des Rohrelements
- 24: vierter Querabschnitt des Rohrelements
- 25: U-förmiger Bogen
- 26: Seitenabschnitt
- 27: Krafteintrag
- 28: kritischer Punkt
- 29: Vorform
- 29a: unteres Ende der Vorform
- 29b: mittlerer Bereich der Vorform
- 30: stabartiges Hilfswerkzeug
- 100: Fahrzeugsitz
- 101: Sitzteil
- X: Längsachse
- Y: Breitenachse
- Z: Höhenachse

## Patentansprüche

1. Rückenlehnenelement (1) für einen Fahrzeugsitz,
**dadurch gekennzeichnet, dass**
das Rückenlehnenelement (1) zumindest ein Rahmenelement (2) umfasst, welches aus einem Rohrelement (3) ausgebildet ist und zumindest einen Abschnitt des Rückenlehnenelements (1) ausgestaltet, wobei eine Kontur des zumindest einen Rahmenelements (2) durch eine Mehrzahl von Biegungen (4) des Rohrelements (3) gegeben ist und derart ausgestaltet ist, dass zumindest eine innenliegende Fläche (5) von dem Rohrelement (3) umschlossen ist.

2. Rückenlehnenelement (1) nach Anspruch 1,
**dadurch gekennzeichnet, dass**
Rückenlehnenelement (1) einen unteren Bereich (1a) umfasst, der dazu geeignet und dafür vorgesehen ist, eine Abstützung in dem Lendenwirbelbereich des Insassen bereitzustellen, wobei das Rückenlehnenelement (1) einen oberen Bereich (1b) umfasst, der dazu geeignet und dafür vorgesehen ist, eine Abstützung in dem Schulterbereich des Insassen bereitzustellen und/oder eine Kopfstütze aufzunehmen oder bereitzustellen.

3. Rückenlehnenelement (1) nach Anspruch 1 oder 2,
**dadurch gekennzeichnet, dass**
das Rahmenelement (2) aus einem einteilig ausgebildeten Rohrelement (3) ausgebildet ist.

4. Rückenlehnenelement (1) nach einem der Ansprüche 1 bis 3,
**dadurch gekennzeichnet, dass**
das Rahmenelement (1) einen Gurtabschnitt (7) umfasst, welcher dafür vorgesehen und geeignet ist eine Gurtvorrichtung daran anzuordnen, wobei der Gurtabschnitt (7) in dem oberen Bereich (1b) des Rückenlehnenelements (1) vorgesehen ist, wobei in einem entlang einer Längsachse (X) unteren Ende (7a) des Gurtabschnitts (7) zwei Abschnitte (8, 9) des Rohrelements (3) im Wesentlichen entlang einer Höhenachse (Z) nebeneinander anliegend sind.

5. Rückenlehnenelement (1) nach Anspruch 4,
**dadurch gekennzeichnet, dass**
der Gurtabschnitt (7) derart ausgebildet ist, dass dieser eine erste innenliegende Fläche (5, 5a) begrenzt, wobei in dieser ersten innenliegenden Fläche (5, 5a), zumindest abschnittsweise, ein erstes plattenartiges Element (10) angeordnet ist, wobei das erste plattenartige Element (10) mittels einer stoffschlüssigen Verbindung an dem Gurtabschnitt (7) angeordnet ist.

6. Rückenlehnenelement (1) nach einem der Ansprüche 2 bis 5,
**dadurch gekennzeichnet, dass**
der obere Bereich (1b) des Rückenlehnenelements (1) das zumindest eine Rahmenelement (2) umfasst, wobei lediglich ein Rahmenelement (2) in dem oberen Bereich (1b) des Rückenlehnenelements (1) vorgesehen ist, wobei das Rahmenelement (2) an einem unteren Rückenlehnenelementteil (11) angeordnet ist, welches den unteren Bereich (1a) des Rückenlehnenelements (1) ausbildet.

7. Rückenlehnenelement (1) nach einem der Ansprüche 1 bis 6,
**dadurch gekennzeichnet, dass**
der untere Bereich (1a) des Rückenlehnenelements (1) und der obere Bereich (1b) des Rückenlehnenelements (1) das zumindest eine Rahmenelement (2) umfassen, wobei lediglich ein Rahmenelement (2) vorgesehen ist.

8. Rückenlehnenelement (1) nach Anspruch 7,
**dadurch gekennzeichnet, dass**
ein unterer Abschnitt (2a) des Rahmenelements (2) zwei schlaufenartige Segmente (12) aufweist, welche entlang einer Breitenachse (Y) voneinander beabstandet sind, wobei die schlaufenartige Segmente (12) jeweils eine zweite innenliegende Fläche (5, 5b) umschließen, wobei in oder auf den zweiten innenliegenden Flächen (5, 5b), zumindest abschnittsweise, jeweils ein zweites plattenartiges Element (13) angeordnet ist, wobei das jeweilige zweite plattenartige Element (13) mittels einer stoffschlüssigen Verbindung an dem jeweiligen schlaufenartigen Segment (12) angeordnet ist.

9. Rückenlehnenelement (1) nach Anspruch 8,
**dadurch gekennzeichnet, dass**
das jeweilige schlaufenartige Segment (12) einen entlang der Längsachse (X) nach unten verlaufenden dritten Abschnitt (14) des Rohrelements (3) und einen entlang der Längsachse (X) nach oben verlaufenden vierten Abschnitt (15) des Rohrelements (3) umfasst, wobei der dritte Abschnitt (14) mit dem vierten Abschnitt (15) über einen gebogenen fünften Abschnitt (16) des Rohrelements (3) verbunden ist, wobei in einem unteren Bereich (12a) des schlaufenartigen Segments (12) der dritte Abschnitt (14) und der vierte Abschnitt (15) entlang der Höhenachse (Z) beabstandet sind, wobei in einem oberen Bereich (12b) des schlaufenartigen Segments (12) der dritte Abschnitt (14) und der vierte Abschnitt (15) aneinander anliegend sind, wobei ein erster Querabschnitt (17) des Rohrelements (3) vorgesehen ist, welcher sich entlang der Breitenachse (Y) zwischen den oberen Bereichen (12b) der beiden schlaufenartigen Segmente (12) erstreckt.

10. Rückenlehnenelement (1) nach einem der vorhergehenden Ansprüche
**dadurch gekennzeichnet, dass**
an dem Rahmenelement (2) zumindest ein weiteres plattenartiges Element (18) und oder eine Stützstrebe (19) angeordnet ist, wobei das weitere plattenartige Element (18) und/oder die Stützstrebe (19) mittels einer stoffschlüssigen Verbindung an dem Rahmenelement (2) angeordnet ist.

11. Fahrzeugsitz (100) mit einem Rückenlehnenelement (1) nach einem der vorhergehenden Ansprüche.

12. Verfahren zur Herstellung eines Rückenlehnenelement (1) für einen Fahrzeugsitz (100), umfassend die folgenden Schritte:
a) Bereitstellen eines Rohrelements (3);
b)Mehrmaliges Biegen des Rohrelements (3) mittels einer ersten Rohrbiegemaschine, wodurch eine Vorform (29) geschaffen wird;
c)Anlegen eines stabartigen Hilfswerkzeugs (30);
d) Biegung der Vorform (29) um das stabartige Hilfswerkzeug (30) derart, dass ein unteres Ende (29a) der Vorform (29) zu einem mittleren Bereich (29b) der Vorform (29) gebracht wird.
